# EUROPÄISCHE PATENTSCHRIFT

(11) **EP 2 501 762 B1**
(45) Veröffentlichungstag und Bekanntmachung des Hinweises auf die Patenterteilung: **13.07.2016**
(21) Anmeldenummer: 10771443.8
(22) Anmeldetag: 28.10.2010
(51) Int. Cl.: C09D 5/34, C08G 18/28, C09J 133/02, C09J 133/06, C09J 133/08

(54) **VERWENDUNG EINES KLEB- UND DICHTSTOFFSYSTEMS ZUM VERKLEBEN VON DAMPFBREMSFOLIEN**
USE OF AN ADHESIVE AND SEALANT SYSTEM FOR BONDING OF VAPOUR BARRIER FILMS
UTILISATION D'UN SYSTÈME D'ADHÉSIF ET DE MATÉRIAU D'ÉTANCHÉITÉ POUR COLLER DES FILM PARE-VAPEUR

(30) Priorität: 16.11.2009 DE 102009046739; 23.03.2010 DE 102010016104
(43) Veröffentlichungstag der Anmeldung: 26.09.2012
(73) Patentinhaber: Saint-Gobain Isover, 92400 Courbevoie (FR)
(72) Erfinder: LANGKAU, Michael, 68535 Edingen-Neckarhausen (DE)
(74) Vertreter: Winter, Brandl, Fürniss, Hübner, Röss, Kaiser, Polte - Partnerschaft mbB
(86) Internationale Anmeldenummer: PCT/EP2010/066355
(87) Internationale Veröffentlichungsnummer: WO 2011/057896

(56) Entgegenhaltungen:
- EP-A1- 1 724 321
- EP-A1- 1 728 807
- US-A- 4 336 298

## Beschreibung

Die vorliegende Erfindung betrifft die Verwendung eines zweikomponentigen Kleb- und Dichtstoffsystems auf Basis wenigstens einer Komponente, die im Wesentlichen frei von flüchtigen organischen Verbindungen (VOC) ist, zum Verkleben von Dampfbremsfolien mit und ohne Vliesbeschichtung, gemäß dem Oberbegriff des Anspruchs 1.

Kleb- und Dichtstoffe werden im Baubereich in großem Umfang eingesetzt. Besonders gefragt sind Stoffe, die wegen ihrer guten Haftung sowohl als Klebstoffe wie auch als Dichtstoffe eingesetzt werden können. Solche Dichtstoffe werden auch als Dichtmassen bezeichnet.

Besondere Bedeutung kommt im Bauwesen der Abdichtung mit solchen Kleb- und Dichtstoffen im Dachbereich zu. Übliche Dachaufbauten weisen von der Rauminnenseite zur Außenseite eine innenseitige Dampfbremse in Form einer Folie auf, an die sich die Dämmung, etwa als Zwischensparrendämmung anschließt. Außenseitig wird als Witterungsschutz eine zweite wasserführende Ebene in Form einer Bahn, insbesondere einer Unterdeck- bzw. Unterspannbahn, aufgebracht, darüber schließt sich als erste wasserführende Ebene die Dacheindeckung mit Unterkonstruktion an. Daneben kann der Dachaufbau weitere Schichten wie etwa eine Untersparrendämmung, eine Aufsparrendämmung oder eine raumseitige Verkleidung aufweisen.

Dabei können auf der Außenseite einer Dachkonstruktion die Unterspannbahnen zum Zweck einer gesicherten Abdichtung gegen Wasserdurchtritt im verlegeüblichen Überlappungsbereich sowie mit weiteren Bauteilen der Konstruktion verklebt werden. Derartige Unterspannbahnen sind diffusionsoffen mit hierfür charakteristischen diffusionsäquivalenten Luftschichtdicken, die auch als sogenannte Sd-Werte bezeichnet werden, von kleiner 0,2 m ausgelegt. Hiermit wird erreicht, dass eventuell in die Konstruktion eingedrungene Feuchtigkeit schnell durch die diffusionsoffene Unterspannbahn aus der Konstruktion zur Umgebung transportiert wird, während das Eindringen von flüssigem Wasser wirkungsvoll verhindert wird.

Die Abdichtung auf der Rauminnenseite, d.h. der Folie untereinander sowie deren Anschluss an andere Elemente der Konstruktion wie Wände, Böden und dergleichen ist der aus Praxissicht relevantere Fall. Diese Folien müssen möglichst luftdicht an der Dachkonstruktion bzw. dem Mauerwerk, z.B. im Giebelbereich befestigt werden und mehrere Folienbahnen müssen luftdicht angeschlossen werden, damit die Folien ihre Funktion ausüben können. Es sind Folien mit konstantem oder solche mit einem von der Umgebungsfeuchte abhängigen S_{d}-Wert bekannt, die aus polyolefinischem oder polyamidischen Material hergestellt sind, die zur Erhöhung der mechanischen Eigenschaften mit einer Verstärkungslage insbesondere aus Polypropylen-Vlies versehen ausgerüstet sein können. Das zugrundeliegende Prinzip der Feuchtigkeitsregulation zur Vermeidung von feuchtigkeitsbedingter Bauschäden mit ggf. nachfolgender Schimmelbildung im Fall der Verwendung einer sogenannten feuchteadaptiven Dampfbremsfolie in einer Konstruktion ist beispielsweise in der DE 195 14 420 C1 erläutert. Die Verwendung von derartigen Dampfbremsfolien ist nicht auf Steildächer beschränkt, weitere gebräuchliche Anwendungen sind beispielsweise in Holzständer- und Fachwerkwänden.

Für eine einwandfreie Funktionalität muss die Abdichtung der Folie gegen Diffusionsbrücken gewährleistet sein. Mit anderen Worten müssen einzelne Dampfbremsfolienbahnen luftdicht aneinander gefügt werden und im Bereich des Mauerwerks muss eine ebenfalls luftdichte Befestigung sichergestellt werden. Hierzu sind im Stand der Technik eine Reihe von Klebetechniken beschrieben. So werden etwa einseitige oder doppelseitige Klebebänder wie auch Klebe- und Dichtmassen aus Klebekartuschen verwendet, um die Dampfbremsfolien aneinander zu fügen und auf dem Mauerwerk abzudichten.

Jedes Klebesystem für sich genommen hat je nach zu verklebenden Teilen und Klebeuntergrund Vor- und Nachteile. So eignen sich beispielsweise Klebebänder gut für das luftdichte Aneinanderfügen mehrerer Dampfbremsfolienbahnen, während sich derartige Klebebänder zum Abdichten der Dampfbremsfolien auf Mauerwerk wegen des rauhen oder unebenen Untergrundes oder ggf. tieferliegender Fugen nur bedingt eignen.

Zum Anschließen von Dampfbremsfolien und auch zum Abdichten am Mauerwerk kommen daher bevorzugt Klebe- und Dichtmassen in Kartuschen mit handelsüblicher Pistolenform und raupenförmiger Klebemassenauftrag zum Einsatz, welche im wesentlichen frei von flüchtigen organischen Verbindungen (VOC) sind:

Derartige einkomponentige Dichtmassen auf Basis einer wässrigen Dispersion von Polyacrylaten sind beispielsweise in der DE 100 00 940 B4 beschrieben.

Eine weitere einkomponentige Dichtmasse auf Basis einer wäßrigen Dispersion aus Vinylpolymeren sowie ein Klebesystem sind beispielsweise in der DE 201 22 638 U1 und der DE 200 23 180 U1 beschrieben.

Dokument EP 1 728 807 A1 offenbart einen zweikomponentigen Heißschmelzklebstoff wobei wenigstens eine Komponente VOC-frei ist, wobei eine Komponente ein Prepolymer auf Basis eines Reaktionsproduktes aus einem Isocyanat und einem Polyetherpolyol ist, das noch feuchtigkeitsreaktive Endgruppen aufweist und beide Komponenten getrennt aufbewahrt werden. Die Komponenten unterscheiden sich in ihrer chemischen Zusammensetzung und weisen daher unterschiedliche Eigenschaften auf.

Ferner beschreibt die US 4 336 298 A ebenfalls ein im Wesentlichen VOC-freies zweikomponentiges Klebesystem, bei welchem beide Komponenten Polyethertriole enthalten, die sich dahingehend unterscheiden, dass die jeweiligen Mengen in den Komponenten unterschiedlich sind und die Komponenten verschiedene weitere Zusätze enthalten, wodurch sich die Viskositäten der Komponentensysteme unterscheiden. Die Lagerung erfolgt getrennt.

Darüber hinaus ist aus der EP 1 724 321 A1 ein VOC-freies und im Wesentlichen wasserfreies Kleb- und Dichtstoffsystem für Dampfbremsfolien beschrieben, welches durch Umgebungsfeuchtigkeit ausgehend von Prepolymeren zu stärker polymerisierten Produkten seine Dichtfähigkeit entfaltet.

Ferner beschreibt die DE 10 2005 041 962 B3 eine Doppelkartusche, mit der fließfähige und/oder pastöse Substanzen getrennt ausbringbar sind.

Schlußendlich beschreibt die DE 199 58 525 A1 die Verwendung wässriger Dispersionen silylterminierter Polymere mit hohem Feststoffgehalt als Klebstoff, Dichtmasse, Oberflächenbeschichtungsmittel, Spachtelmasse oder zur Herstellung von Formteilen.

Allen diesen Kleb- und Dichtmassen des Standes der Technik ist jedoch gemeinsam, dass sie als einkomponentige bzw. zu einer einkomponentigen Masse reagierend einen Kompromiss darstellen, da mit einer solchen Masse alle vorhandenen Untergründe und Klebe- bzw. Dichtungsaufgaben abgedeckt werden sollen. So stellte sich beispielsweise heraus, dass einerseits niedrigviskose Klebe- und Dichtmassen auf stark saugfähigen Untergründen - wie z.B. Mauerwerk - schnell versickern und somit im Lauf der Zeit ihre Klebekraft verlieren oder erst gar nicht genügend entfalten, so dass häufig an derartigen Stellen ggf. mit einem anderen Kleber nachgearbeitet werden muss, was jedoch zu chemischen Unverträglichkeiten hinsichtlich der Polarität und/oder Reaktivität der unterschiedlichen Kleber führen kann, so dass wiederum keine zuverlässige Langzeitabdichtung der Dampfbremsfolien gegeben ist oder sogar eine unmittelbare Ablösung der Dampfbremsfolien voneinander oder vom kritischen Untergrund erfolgt.

Werden andererseits höher viskose, insbesondere pastöse Klebe- und Dichtstoffmassen verwendet, so können diese je nach Beschaffenheit der Untergrundoberfläche, etwa bei staubbelasteten rauhen Mauerwerksoberflächen ebenfalls nicht mit der erforderlichen Zuverlässigkeit an die Dampfbremsfolien und/oder den Untergrund binden.

Ausgehend von den oben beschrieben Klebe- und Dichtsystemen des Standes der Technik ist es daher Aufgabe der vorliegenden Erfindung, ein Kleb- und Dichtstoffsystem zur Verfügung zu stellen, dass die Nachteile des Stands der Technik überwindet und eine sichere und zuverlässige Anfügung von Dampfbremsfolien und eine luftdichte Abdichtung der Dampfbremsfolien auf jeglichem Untergrund ermöglicht.

Diese Aufgabe wird durch eine Verwendung gemäß Anspruch 1 gelöst.

Insbesondere betrifft die vorliegenden Erfindung die Verwendung eines zweikomponentigen Kleb- und Dichtstoffsystems auf Basis wenigstens einer Komponente, die im Wesentlichen frei von flüchtigen organischen Verbindungen (VOC) ist, zum Verkleben von Dampfbremsfolien mit und ohne Vliesbeschichtung,
wobei eine erste und/oder eine zweite Komponente ausgewählt ist aus der Gruppe, bestehend aus:
selbstvernetzende Polymere auf Basis von Maleinsäure-Polystyrol-Co-Polymeren, Acryl-, Alkyd-, Epoxid-, Vinylpolymeren, Polyurethan, Polyvinylacatat, Polybuten, Polyisobuten, hydroxylierte Polyesterharze, Silikonpolymere, Polyethern, Polyolefinen, Polybutadien, Polyisoprenen, Polystyrol-Butadien-Co-Polymeren, Polychloroprenpolymeren, Poly-Acrylnitril-Butadien-Co-Polymeren, Polysilikonen; und
einem durch Feuchtigkeitseinwirkung aushärtenden Polymer-Precursor mit durch Feuchtigkeit vernetzungsfähigen Gruppen, wobei der Polymer-Precursor ausgewählt ist aus der Gruppe , bestehend aus: Precursorpolymeren von Polyurethanen, Polyethern, Polyolefinen, Polybutadien, Polyisoprenen, Polystyrol-Butadien-Co-Polymeren, Polychloroprenpolymeren, Poly-Acrylnitril-Butadien-Co-Polymeren, Polysilikonen;
wobei
die erste und die zweite Komponente räumlich getrennt voneinander angeordnet sind und im Wesentlichen ohne Vermischung zusammen ausgebracht werden, wobei die Komponenten unterschiedliche Viskositäten aufweisen; und
wobei die erste und zweite Komponente einen Viskositätsunterschied von mindestens 100 Pas bei 23°C, gemessen nach ISO 2555 bestimmt nach Brookfield Typ A mit Spindel 7 bei 10 U/min, aufweisen.

Für die Zwecke der vorliegenden Erfindung wird unter der Formulierung "räumlich getrennt voneinander angeordnet" sowohl eine sich nicht vermischende Anordnung der Komponenten innerhalb desselben Behältnisses ohne zusätzliche physikalische Trenneinrichtungen, als auch eine solche mit zusätzlichen physikalischen Trenneinrichtungen, wie beispielsweise ein Mehrkammersystem, verstanden.

Eine einzelne Komponente kann somit bestehen aus einem selbstvernetzenden Harz oder einem mit einem Vernetzer ausgestattetem Basisharz. Das vorliegende Zweikomponentensystem ist somit gerade nicht ein aus der Fügetechnik bekanntes System bestehend aus Kleber und Härter.

Als selbstvernetzende Polymere kommen Systeme in Frage, die unter Einwirkung von Feuchtigkeit und/oder Sauerstoff zu hochmolekularen Kunststoffsystemen abreagieren. Aus der Literatur bekannte reaktive Gruppen sind beispielsweise Silanolgruppen, olefinische Gruppen, z.B: Methacrylester.

Eine bevorzugte Ausführungsform der vorliegenden Erfindung ist ein solches Kleb- und Dichtstoffsystem, bei dem die erste und zweite Komponente unterschiedliche Viskositäten und/oder unterschiedliche Klebrigkeiten, insbesondere im ausgehärteten Zustand unterschiedliche Selbstklebrigkeiten aufweisen. Als Maß für die Selbstklebrigkeit wird hier die Lauflänge der Kugel im sog. "rolling ball tack" nach ASTM D3121-06 zugrunde gelegt, wobei eine Auftragsmenge von 300 g/m² auf ein Silikonpapier wie in der DE 100 00 940 verwendet wird, und der Mittelwert aus 10 Messungen gebildet wird.

Die unterschiedlichen Viskositäten haben den Vorteil, dass beispielsweise eine erste Komponente mit höher viskosem Kleb- und Dichtstoff (eine "harte Harzkomponente") für den korrekten Andruck der Dampfbremsfolien zur Verfügung steht und gleichzeitig daneben ein in einem einzigen Arbeitsgang aufgebrachte zweite niedriger viskose Komponente (eine "weiche Harzkomponente") für das angemessene Eindringverhalten in den Untergrund zur Verfügung steht. So wird trotz unterschiedlicher Anforderung an das sofortige Haften beim Andrücken der Dampfbremsfolien und die Langzeithaftung und damit der Langzeitabdichtung eine luftdichte Verklebung der Dampfbremsfolien sichergestellt.

Unterschiedliche Viskositäten können leicht beispielsweise durch Zugabe unterschiedlicher Mengen an Verdickungsmitteln und/oder Vernetzern in den beiden Harzkomponenten eingestellt werden. Ferner ist es natürlich auch möglich die physikalischen und/oder auch chemischen Eigenschaften der beiden Harzkomponenten durch unterschiedliche Polymerkettenlängen einzustellen. So sind typischerweise längerkettige Polymeren auch viskoser als kürzerkettige.

Zur besseren Kenntlichmachung für den Verarbeiter vor Ort, kann es vorteilhaft sein, unterschiedliche Farbkennzeichnungen - etwa für unterschiedliche Eigenschaften, wie "harter" oder "weicher" Kleber, durch unterschiedliche Einfärbung der ersten und der zweiten Komponente, zu verwenden.

In einer typischen Ausführungsform der vorliegenden Erfindung wird die erste und die zweite Komponente in gleichen Mengen abgegeben. Denkbar ist es natürlich auch die beiden Komponenten in unterschiedlichen Mengen abzugeben.

Für die Zwecke der vorliegenden Erfindung kann die räumliche Trennung der beiden Komponenten beispielsweise in einer 310 ml-Standardkartusche etwa durch paralleles Einpressen der beiden (oder auch mehreren) Komponentenmassen in die Kartusche erfolgen. Beim Herausdrücken des Inhalts, z.B. mit einer handelsüblichen Kartuschen-Klebepistole, werden die innerhalb der Kartusche räumlich getrennt und somit unvermischt vorliegenden Komponenten im Wesentlichen genauso unvermischt ausgebracht, wie sie im Inneren der Kartusche angeordnet waren.

Eine weitere Möglichkeit zur Durchführung der vorliegenden Erfindung liegt in den dem Fachmann wie auch dem Laien seit vielen Jahren bekannten System der "gestreiften Zahnpasta", wie es etwa aus der WO 2000/033801 bekannt ist. Hierbei besitzt eine typische 310 ml-Standardkartusche an ihrer Austrittsöffnung ein in das Innere der Kartusche hineinragendes Rohr. Dieses Rohr ist am unteren Ende in Richtung Austrittsöffnung betrachtet - also am vorderen Ende der Kartusche - mit einem oder mehreren Schlitzen versehen. Eine erste Komponente wird in die Kartusche bis unterhalb der Öffnung des ins Innere der Kartusche hineinragenden Rohres eingefüllt. Die zweite Komponente wird dann ohne Vermischung auf die erste Komponente geschichtet, die Kartusche vollständig bis auf die gewünschte Menge mit der zweiten Komponente gefüllt und die Kartusche mit dem beweglichen Pressstempel verschlossen. Somit sind die erste und die zweite Komponente innerhalb einer Kartusche räumlich getrennt voneinander angeordnet. Zum gleichzeitigen Ausbringen der beiden Komponenten wird die Kartusche in eine handelsübliche Klebepistole eingesetzt, die Kartusche auf der Ausbringseite geöffnet und ggf. eine Tülle zum besseren Verteilen auf die Kartusche aufgesetzt.

Wird mittels der Klebepistole Druck auf den Pressstempel ausgeübt, so wird die zweite Komponente durch das ins Innere der Kartusche ragende Rohr gedrückt und aufgrund der Druckverteilung die erste Komponente durch die Schlitze in dem Rohr gedrückt, so dass sich auf der zweiten Komponente Streifen aus Material der ersten Komponente bilden und diese zusammen ohne wesentliche Vermischung - nach Art der "gestreiften Zahnpasta"-ausgebracht werden.

Das Verhältnis der beiden Komponenten zueinander ist steuerbar über die Verhältnisse der Querschitte des Rohrs und der Schlitze sowie über die Länge, die das Rohr ins Innere ragt, wobei Grenzen gesetzt sind durch den Anschlag des Pressstempels.

Eine bevorzugte Ausführungsform ist die Verwendung eines Kleb- und Dichtstoffsystems, welches die Dimensionierung einer standardisierten Kartusche (310 ml) aufweist, die mit einer leicht modifizierten handelsüblichen Kartuschen-Klebepistole ausgepresst werden kann.

In einem derartigen Kleb- und Dichtstoffsystem sind die erste und die zweite Komponente in einer gemeinsamen Kartusche in getrennten Kammern angeordnet und die Komponenten werden mit jeweils einem Kolben aus ihren Kammern, durch separate Düsen, insbesondere raupenförmig nebeneinander im Wesentlichen ohne Vermischung, ausgebracht.

Da getrennte Kammern und Düsen vorliegen findet eine Vermischung höchstens im Randbereich von nebeneinander liegenden ausgepressten Kleberaupen statt.

Es ist jedoch auch möglich, dass die erste und die zweite Komponente in zwei getrennten Schlauchbeuteln enthalten sind, wobei die Schlauchbeutel in einer Art doppelläufiger Schlauchbeutel-Pistole mit zwei Abgabedüsen angeordnet sind, welche wie üblich bedient werden können

Ein nicht erfindungsgemäßes Ausführungsbeispiel ist folgendermaßen aufgebaut

| | | | Komponente 1 | Komponente 2 |
|---|---|---|---|---|
| Basisharz | Acronal 4F | BASF | 44 | 44 |
| Prepolymer | Polymer ST 61 | Hansa Chemie | 4 | 8 |
| Füllstoff | Quarzmehl | | 50 | 46 |
| Vernetzer | KBE 903 | Shin Etsu | 2 | 2 |

Die vorliegende Erfindung eignet sich ganz besonders zum Verkleben von Dampfbremsfolien mit und ohne Vliesbeschichtung.
Mit dem vorliegenden Kleb- und Dichtstoffsystem können besonders vorteilhaft Dampfbremsfolien auf Basis von Polyolefinen oder Polyamiden mit oder ohne Polyolefinbeschichtung im Dachbereich luftdicht aneinandergefügt und am Mauerwerk abgedichtet werden. Unabhängig vom Untergrund können die Eigenschaften der beiden Komponenten so eingestellt werden, dass sämtliche Unwägbarkeiten der Untergrundeigenschaften oder der zu verbindenden Teile durch die eingestellten Eigenschaften der Klebe- und Dichtkomponenten im Gegensatz zu den Einkomponenten Kleb- und Dichtstoffsystemen des Standes der Technik überwunden werden können. Insbesondere eignet sich das beschriebene Kleb- und Dichtstoffsystem bevorzugt zum Verkleben von Dampfbremsfolien, vorzugsweise polyolefinischen oder polyamidischen Dampfbremsfolien mit und ohne Vliesbeschichtung auf nicht glatten, saugenden Untergründen, insbesondere Putz, Beton, Ziegelsteinen oder Poroton, jedoch auch zum Anschluss von Dampfbremsfolienbahnen aneinander.
Des Weiteren ist das eingesetzte Kleb- und Dichtstoffsystem umweltfreundlich, da es im Wesentlichen frei von flüchtigen, die Umwelt belastenden Stoffen ist.

Nach dem Aushärten bilden die im vorliegenden System verwendeten Kleb- und Dichtstoffe hochviskose, elastische Massen.

Das Aushärten erfolgt je nach Wahl der zu verwenden Komponenten mittels Luftfeuchtigkeit oder durch Verdunsten von Wasser und/oder Nachpolymersieren.

Darüber hinaus weist der von dem vorliegenden Kleb- und Dichtstoffsystem abgegebene Kleb- und Dichtstoff schon zu Beginn der Anwendung eine hohe Adhäsivkraft auf.

Als Polymer-Precursor eignen sich solche Polymere mit durch Feuchtigkeit hydrolisierenden oder vernetzenden Gruppen. Insbesondere geeignet sind solche Polymer-Precursor, die ausgewählt sind aus der Gruppe Polyurethan-, Polyether-, Polyolefin-, Polybutadien, Polyisopren-, Polystyrol-Butadien-Co-Polymere, Polychloroprenpolymere, Poly-Acrylnitril-Butadien-Prepolymere, Polysilikone,

Vorzugsweise enthält der eingestzte Kleb- und Dichtstoff Polyurethan-, Polyether- und/oder Polyolefin-Prepolymere. Ohne Einschränkung der Allgemeinheit besonders geeignet sind beispielsweise das Polyether-Prepolymer KANEKE SILYL SAX400 der Kaneka Belgium N.V., die Polyurethan-Prepolymere POLYMER ST 61, POLYMER ST 65 und POLYMER ST 67 der Hanse Chemie AG und das Prepolymer Baycoll XP 2458 der Bayer AG.

Ferner werden bevorzugt eingesetzt: Acryl-, Alkyd-, Epoxid-, Polyurethan- und/oder Polyvinylacetat-Harze. Besonders bevorzugt enthält der Kleb- und Dichtstof Acryl-, Epoxid- und Alkydharze. Alternativ besonders bevorzugt sind Polybutene, Polyisobutene und hydroylierte Polyesterharze. Ohne Einschränkung der Allgemeinheit sind ganz besonders bevorzugte Beispiele für einsetzbare Komponenten Polyacrylate auf der Basis von n-Butylacrylat wie Acronal 4F und AcResin DS 3500 der BASF SE. Es sind aber auch alle anderen in Kleb- und Dichtstoffen üblichen Harze erfindungsgemäß geeignet.

Die Komponenten des verwendeten Kleb- und Dichtstoffsystems können einen oder mehrere Zusatzstoffe enthalten, die ausgewählt sind aus anorganischen Füllstoffen, organischen Füllstoffen, Weichmachern, Tackifiern, oligomeren Füllstoffen, polymeren Füllstoffen, Rheologie-Modifikatoren, wie zum Beispiel Verdickern oder Thixotropiermitteln, Vernetzern, Haftvermittlern, Stabilisatoren und Farbstoffen. Die Zusatzstoffe können alleine oder als Gemische vorhanden sein. Sie liegen in folgenden Mengen im verwendeten Kleb- und Dichtstoff vor jeweils bezogen auf 100 Gewichtsteile fertigen Kleb- und Dichtstoffes: 0 bis 80 Gew.-% anorganische und/oder organische Füllstoffe, 0 bis 60 Gew.-% Weichmacher, 0 bis 60 Gew.-% Tackifier, 0 bis 80 Gew.-% oligomere und/oder polymere Füllstoffe, 0 bis 20 Gew.-% Rheologie-Modifikatoren, 0 bis 15 Gew.-% Vernetzer, 0 bis 10 Gew.- % Haftvermittler und 0 bis 15 Gew.-% Stabilisatoren.

Bei den jeweiligen Zusatzstoffen handelt es sich um dem Fachmann bekannte Zusatzstoffe, dessen Auswahl dem Fachmann keinerlei Schwierigkeiten bereitet.

In einer bevorzugten Ausführungsform enthält der verwendete Kleb- und Dichtstoff einen Vernetzer und/oder einen Härter, der mit Umgebungsfeuchte den Kleb- und Dichtstoff aushärtet. Bevorzugt führt er die notwendige Festigkeit für den Kleb- und Dichtstoff mittels einer chemischen Reaktion mit der Umgebungs- bzw. Luftfeuchtigkeit herbei. Bevorzugte Vernetzer sind Verbindungen, die durch Feuchtigkeit hydrolisierbare und/oder vernetzende Gruppen enthalten. Dies können niedermolekulare Verbindungen und/oder Prepolymere sein. Besonders bevorzugte Vernetzer sind primäre, sekundäre oder tertiäre Aminoverbindungen, die gegebenenfalls auch Vernetzergruppen enthalten können. Ohne Einschränkung der Allgemeinheit sind bevorzugte Vernetzer beispielsweise die folgenden Aminosilane: γ-Aminopropyltriethoxysilan (KBE 903, Shin Etsu; A-1100, GE Advanced Materials), γ-Aminopropyltrimethoxysilan (A-1110, GE Advanced Materials), N-(β-Aminoethyl)-γ-aminopropyl-trimethoxysilan (A-1120, GE Advanced Materials), Bis-[γ-(trimethoxysilyl)propyl]amin (A-1170/Y-9627, GE Advanced Materials), 4-Amino-3,3-dimethyl-butyl-trimethoxysilan (A-1637/Y-11637, GE Advanced Materials), γ-Aminopropylmethyl-diethoxysilan (A-2100, GE Advanced Materials).

Mit Füllstoffen anorganischer oder organischer Natur können andere physikalische Eigenschaften als die Viskosität, wie beispielsweise die Thixotropie, Härte bzw. Festigkeit des Kleb- und Dichtstoffes eingestellt werden.

Bevorzugte anorganische Füllstoffe sind Quarzmehl, gefälltes oder natürliches Bariumsulfat, Titandioxid, gefälltes oder natürliches Calciumcarbonat (zum Beispiel Kreide), gefälltes oder natürliches Kaolin, Talkum, Magnesium- oder Aluminiumhydroxid (letztere Hydroxide erlauben eine Einstellung der Brandklasse), Zinkoxid, Zirkoniumsalze, Glaskugeln oder Mikrohohlkugeln aller Art.

Bevorzugte organische Füllstoffe sind beispielsweise Harze auf Kohlenwasserstoff- oder Kolophoniurnbasis, Tallharz, Balsamharz, Terpene, Oligomere, wie zum Beipiel Butylene, Acrylate oder andere Vinylbasierte Moleküle mit einem relativ niedrigen Molekulargewicht, Urethane oder Ester mit relativ niedrigem Molekulargewicht oder polymere Weichmacher auf Polyesterbasis, z. B. Benzoflex. Als organische Füllstoffe sind auch polymere Füllstoffe geeignet, wie zum Beispiel Schlagzähmodifikatoren, Kunststofffasern oderKunststoffpulver auszumBeispielPolyacrylaten,Polystyrol, Polyester, Polyamid, Polyurethan, Polyvinylchlorid, Polyolefinen, Polyvinylacetat, Polyisopren oder Poly(iso)butylen, sowie Blockcopolymere davon.

Durch den Zusatz von für Dichtstoffen typischen Haftmitteln kann die Haftung des verwendeten Dicht- und Klebstoffes auf Untergründen noch verstärkt werden. Die Haftmittel können bifunktionell sein, indem sie als strukturelle Merkmale sowohl die Haftung verstärkende Gruppen wie beispielsweise Aminogruppen als auch Vernetzergruppen wie beispielsweise vernetzende Silangruppen enthalten.

Bei den Weichmachern handelt es sich um flüssige oder feste indifferente organische Substanzen mit geringem Dampfdruck. Aufgrund ihres Löse- und Quellvermögens verringern sie die Härte des Harzes und/oder der verwendeten Precursor-Polymeren bzw. des aus dem Precursor-Polymer entstandenen elastomeren Makromoleküls und ändern sein Haftvermögen. Geeignete Weichmacher sind beispielsweise die dem Fachmann wohl bekannten Phthalate, Adipate, Citrate, Phosphate, Trimellithsäure oder Sulfonsäure.

Bei den Tackifiern, mit denen die Klebrigkeit eingestellt werden kann, handelt es sich vorzugsweise um Kolophonium- oder Kohlenwasserstoff-basierte Harze.

Bevorzugte Rheologie-Modifikatoren sind Polyurethan-Verdicker, Acrylat-Verdicker, Cellulose-Verdicker, Polyvinylalkohol-Verdicker, Silikate, Vinylether-/Maleinsäureanhydrid oder Polyethylenoxid.

Bevorzugte Stabilisatoren sind sterisch gehinderte Phenole, wie zum Beispiel Irganox 110, Antioxidant 330 oder Cyanox 2246, die zur Erhöhung der Temperaturstabilität eingesetzt werden, und sterisch gehinderte Phenole und/oder sterisch gehinderte Amine, wie Irganox 1076 oder 1010, Tinuvin P, Tinovin 326 oder 770, oder Antioxidant 330, oder modifizierte Titandioxide, die zur Erhöhung der UV-Beständigkeit verwendet werden.

Daneben können die im Rahmen der vorliegenden Erfindung verwendeten ersten und zweiten Komponenten noch weitere übliche Zusatzstoffe enthalten, beispielsweise Biozide (Konservierungsstoffe).

Zur Einfärbung der Komponenten mit unterschiedlichen Eigenschaften eignen sich insbesondere anorganische und organische Pigmente.

Durch Wahl der geeigneten Füllstoffe und Vernetzer kann vom Fachmann eine optimale Kohäsion erreicht werden. Diese sollte im Baubereich bei 70°C noch ausreichend sein. Der Fachmann kann hierbei die optimale Kohäsion durch entsprechende Abstimmung der Kettenlänge der Harzkomponenten, die Menge und Qualität der Füllstoffe und Vernetzer abstimmen.
Die Additive liegen in einer Menge von etwa 0 bis etwa 80 Gew.-%, insbesondere von etwa 10 bis etwa 70 Gew.-%, am meisten bevorzugt von etwa 30 bis etwa 60 Gew.-% vor, jeweils bezogen auf den Kleb- und Dichtstoff.

Weitere Vorteile und Merkmale der vorliegenden Erfindung ergeben sich anhand der Beschreibung von Ausführungsbeispielen:

### Beispiele

### (nicht erfindungsgemäß) Herstellung der Komponenten:

Harz und Precursor jeder einzelnen Komponente werden bei Raumtemperatur miteinander vermischt. Anschließend werden der Füllstoff, der/die Vernetzer und die ggf. weiteren Bestandteile untergemischt; wird ein Wachs (z.B. Crayvallac Super) zugegeben, so geschieht dies bei erhöhter Temperatur (ca. 60°C). Abschließend wird die Komponente unter Vakuum vermischt und im angegebenen Mengenverhältnis mit der zweiten Komponente abgefüllt.

Im Fall der Verwendung eines selbstvernetzenden Polymers entfällt der erste Mischschritt.

**Komponente 1:**

| | Bezugsquelle | Gew.-% |
|---|---|---|
| Acronal 4F | BASF SE | 44 |
| Polymer ST 61 | Hansa Chemie | 4 |
| Quarzmehl M300 | Euroquarz | 50 |
| KBE 903 | Shin Etsu | 2 |

**Komponente 2:**

| | Bezugsquelle | Gew.-% |
|---|---|---|
| Acronal 4F | BASF SE | 44 |
| Polymer ST 61 | Hansa Chemie AG | 8 |
| Quarzmehl M300 | Euroquarz | 46 |
| KBE 903 | Shin Etsu | 2 |

**Komponente 3:**

| | Bezugsquelle | Gew.-% |
|---|---|---|
| AcResin DS 3500 | BASF SE | 52 |
| Polymer ST 61 | Hansa Chemie AG | 6 |
| Quarzmehl M300 | Euroquarz | 40 |
| KBE 903 | Shin Etsu | 2 |

**Komponente 4:**

| | Bezugsquelle | Gew.-% |
|---|---|---|
| AcResin DS 3500 | BASFAG | 49 |
| Polymer ST 61 | Hansa Chemie AG | 9 |
| Quarzmehl M300 | Euroquarz | 40 |
| KBE 903 | Shin Etsu | 2 |

**Komponente 5:**

| | Bezugsquelle | Gew.-% |
|---|---|---|
| Acronal 4F | BASF SE | 44 |
| Polymer ST 61 | Hansa Chemie | 4 |
| Quarzmehl M300 | Euroquarz | 48 |
| KBE 903 | Shin Etsu | 4 |

**Komponente 6:**

| | Bezugsquelle | Gew.-% |
|---|---|---|
| AcResin DS 3500 | BASF AG | 52 |
| Polymer ST 61 | Hansa Chemie AG | 6 |
| Quarzmehl M300 | Euroquarz | 38 |
| KBE 903 | Shin Etsu | 4 |

Aus diesen Komponenten wurden folgende zweikomponentigen Kleb- und Dichtstoffsysteme hergestellt,
1) Komponente 1 + Komponente 2 im Mengenverhältnis 1:1
2) Komponente 1 + Komponente 5 im Mengenverhältnis 1:1
3) Komponente 1 + Komponente 5 im Mengenverhältnis 2:1
4) Komponente 1 + Komponente 5 im Mengenverhältnis 1:2
5) Komponente 1 + Komponente 2 im Mengenverhältnis 1:1
6) Komponente 2 + Komponente 6 im Mengenverhältnis 1:1
7) Komponente 1 + Komponente 2 im Mengenverhältnis 1:1
8) Komponente 3 + Komponente 4 im Mengenverhältnis 1:1
9) Komponente 3 + Komponente 6 im Mengenverhältnis 1:1
10) Komponente 3 + Komponente 6 im Mengenverhältnis 2:1

Alle Beispiele weisen für die Anwendung ausreichende Eigenschaften auf. Dampfbremsfolien mit und ohne Vliesbeschichtung werden auch auf nicht glatten, saugenden Untergründen, insbesondere Putz, Beton, Ziegelsteinen oder Poroton sicher verklebt. Chemische Unverträglichkeiten der Komponenten miteinander wurden in keinem Fall beobachtet.

## Patentansprüche

1. Verwendung eines zweikomponentigen Kleb- und Dichtstoffsystems auf Basis wenigstens einer Komponente, die im Wesentlichen frei von flüchtigen organischen Verbindungen (VOC) ist, zum Verkleben von Dampfbremsfolien mit und ohne Vliesbeschichtung,
**dadurch gekennzeichnet, dass**
eine erste und/oder eine zweite Komponente ausgewählt ist aus der Gruppe, bestehend aus:
selbstvernetzende Polymere auf Basis von Maleinsäure-Polystyrol-Co-Polymeren, Acryl-, Alkyd-, Epoxid- , Vinylpolymeren, Polyurethan, Polyvinylacatat, Polybuten, Polyisobuten, hydroxylierte Polyesterharze, Silikonpolymere, Polyethern, Polyolefinen, Polybutadien, Polyisoprenen, Polystyrol-Butadien-Co-Polymeren, Polychloroprenpolymeren, Poly-Acrylnitril-Butadien-Co-Polymeren, Polysilikonen; und
einem durch Feuchtigkeitseinwirkung aushärtenden Polymer-Precursor mit durch Feuchtigkeit vernetzungsfähigen Gruppen, wobei der Polymer-Precursor ausgewählt ist aus der Gruppe , bestehend aus: Precursorpolymeren von Polyurethanen, Polyethern, Polyolefinen, Polybutadien, Polyisoprenen, Polystyrol-Butadien-Co-Polymeren, Polychloroprenpolymeren, Poly-Acrylnitril-Butadien-Co-Polymeren, Polysilikonen;
wobei die erste und die zweite Komponente räumlich getrennt voneinander angeordnet sind und im Wesentlichen ohne Vermischung zusammen ausgebracht werden, wobei die Komponenten unterschiedliche Viskositäten aufweisen; und wobei die erste und zweite Komponente einen Viskositätsunterschied von mindestens 100 Pas bei 23°C, gemessen nach ISO 2555 bestimmt nach Brookfield Typ A mit Spindel 7 bei 10 U/min, aufweisen.

2. Verwendung nach Anspruch 1, **dadurch gekennzeichnet, dass** die erste und zweite Komponente im ausgehärteten Zustand unterschiedliche Selbstklebrigkeiten gemäß Rollkugeltest nach ASTM D3121-06 wobei eine Auftragsmenge von 300 g/m² auf ein Silikonpapier verwendet wird, aufweisen.

3. Verwendung nach einem der Ansprüche 1 oder 2, **dadurch gekennzeichnet, dass** die erste und zweite Komponente zur Einstellung unterschiedlicher Viskositäten unterschiedliche Mengen an Verdickungsmitteln und/oder Vernetzern enthalten und/oder unterschiedliche Polymerkettenlängen aufweisen.

4. Verwendung nach einem der Ansprüche 1 bis 3, **dadurch gekennzeichnet, dass** die erste Komponente transparent ist und die zweite Komponente ein Farbstoffmaterial enthält, welches ausgewählt ist aus der Gruppe bestehend aus Farbstoffen oder Füllstoffen mit Eigenfarbe; oder
dass die erste und die zweite Komponente unterschiedliche Farbstoffmaterialien enthalten, welche ausgewählt sind aus der Gruppe bestehend aus Farbstoffen oder Füllstoffen mit Eigenfarbe.

5. Verwendung nach einem der Ansprüche 1 bis 4, **dadurch gekennzeichnet, dass** die erste und die zweite Komponente in gleichen Mengen abgegeben wird.

6. Verwendung nach einem der Ansprüche 1 bis 4, **dadurch gekennzeichnet, dass** das
die erste und die zweite Komponente in unterschiedlichen Mengen abgegeben wird.

7. Verwendung nach einem der Ansprüche 1 bis 6, **dadurch gekennzeichnet, dass** die erste und die zweite Komponente in einer gemeinsamen Kartusche in getrennten Kammern angeordnet ist und die Komponenten mit jeweils einem Kolben aus ihren Kammern, durch separate Düsen, insbesondere raupenförmig nebeneinander im Wesentlichen ohne Vermischung, ausgebracht werden.

8. Verwendung nach einem der Ansprüche 1 bis 7, **dadurch gekennzeichnet, dass** das System nach Art einer Kartuschen-Klebepistole ausgebildet ist.

9. Verwendung nach einem der Ansprüche 1 bis 8, **dadurch gekennzeichnet, dass** die erste und die zweite Komponente in zwei getrennten Schlauchbeuteln enthalten sind, wobei die Schlauchbeutel in einer Art doppelläufiger Schlauchbeutel-Pistole mit zwei Abgabedüsen angeordnet sind.

10. Verwendung nach einem der Ansprüche 1 bis 9 zum Verkleben von Dampfbremsfolien mit und ohne Vliesbeschichtung auf nicht glatten, saugenden Untergründen, insbesondere Putz, Beton, Ziegelsteinen oder Poroton.

## Claims

1. Use of a two-component adhesive-and-sealant system on the basis of at least one component that is substantially free of volatile organic compounds (VOC), for bonding vapor barrier films with and without a non-woven coating,
**characterized in that**
a first and/or a second component is selected from the group consisting of:
self-crosslinking polymers on the basis of maleic acid-polystyrene copolymers, acrylic polymers, alkyd polymers, epoxy polymers, vinyl polymers, polyurethane, polyvinyl acetate, polybut[yl]ene, polyisobutylene, hydroxylated polyester resins, silicone polymers, polyethers, polyolefins, polybutadiene, polyisoprenes, polystyrene-butadiene copolymers, polychloroprene polymers, polyacrylonitrile-butadiene copolymers, polysilicones; and
a polymer precursor curing under the influence of moisture which includes groups that are capable of crosslinking due to moisture, the polymer precursor being selected from the group consisting of: precursor polymers of polyurethanes, polyethers, polyolefins, polybutadiene, polyisoprenes, polystyrene-butadiene copolymers, polychloroprene polymers, polyacrylonitrile-butadiene copolymers, polysilicones;
wherein the first and the second component are disposed physically separate from each other and are dispensed jointly substantially without mixing, the components having different viscosities, and
wherein the first and the second component exhibit a viscosity difference of at least 100 Pas at 23°C, measured in accordance with ISO 2555 determined according to Brookfield Type A with spindle 7 at 10 rpm.

2. Use according to claim 1, **characterized in that** the first and the second component have different degrees of pressure-sensitive tack in accordance with the rolling ball test according to ASTM D3121-06 in the cured condition, wherein an applied quantity of 300 g/m² on a silicone paper is used.

3. Use according to any one of claims 1 to 2, **characterized in that** the first and the second component contain different quantities of thickening agents and/or crosslinking agents and/or have different polymer chain lengths for the adjustment of different viscosities.

4. Use according to any one of claims 1 to 3, **characterized in that** the first component is transparent and the second component contains a coloring agent material which is selected from the group consisting of coloring agents or fillers having an inherent color; or
that the first and the second component contain different coloring agent materials which are selected from the group consisting of coloring agents or fillers having inherent colors.

5. Use according to any one of claims 1 to 4, **characterized in that** the first and the second component are dispensed in equal quantities.

6. Use according to any one of claims 1 to 4, **characterized in that** the first and the second component are dispensed in different quantities.

7. Use according to any one of claims 1 to 6, **characterized in that** the first and the second component are disposed in separate chambers in a common cartridge, and the components are dispensed from their chambers with the aid of respective pistons through separate nozzles, in particular in the form of adjacent beads, substantially without mixing.

8. Use according to any one of claims 1 to 7, **characterized in that** the system is configured in the manner of a cartridge adhesive pistol.

9. Use according to any one of claims 1 to 8, **characterized in that** the first and the second component are contained in two separate tubular bags, the tubular bags being disposed in a kind of double-barrel tubular bag pistol having two dispensing nozzles.

10. Use according to any one of claims 1 to 9 for bonding vapor barrier films with and without a non-woven coating on irregular and absorbent surfaces, in particular plaster, concrete, bricks, or Poroton.

## Revendications

1. Utilisation d'un système de colle et de substance d'étanchéité à deux composants à base au moins d'un composant qui est essentiellement sans composés organiques volatils (VOC), afin de coller des films pare-vapeur avec ou sans non-tissé de revêtement,
**caractérisée en ce**
**qu'**un premier et/ou un deuxième composant sont choisis parmi le groupe constitué de :
polymères auto-réticulants à base de copolymères d'acide maléique-polystyrène, de polymères acryliques, de polymères alkyde, de polymères époxy, de polymères vinyliques, polyuréthane, polyacétate de vinyle, polybutène, polyisobutène, résines de polyester hydroxylées, polymères siliconés, polyéthers, polyoléfines, polybutadène, polypolyisoprènes, copolymères de polystyrène-butadiène, polymères de type polychloroprène, copolymères de polyacrylonitrile-butadiène, polysilicones, et
et
d'un précurseur polymère durcissant sous l'action de l'humidité, comprenant des groupes réticulables par l'humidité, sachant que le précurseur polymère est choisi parmi le groupe constitué de : polymères précurseurs de polyuréthanes, polyéthers, polyoléfines, polybutadiène, polyisoprènes, copolymères de polystyrène-butadiène, polymères de type polychloroprène, copolymères de polyacrylonitrile-butadiène, polysilicones,
sachant que le premier et le deuxième composant sont disposés de manière séparée spatialement l'un de l'autre et sont dispersés conjointement essentiellement sans mélange, sachant que les composants présentent des viscosités différentes, et
sachant que le premier et le deuxième composant présentent une différence de viscosité d'au moins 100 Pas à une température de 23 °C, mesurée selon la norme ISO 2555 déterminée selon Brookfield type A utilisant une broche n° 7 à 10 tr/min.

2. Utilisation selon la revendication 1, **caractérisée en ce que** le premier et le deuxième composant présentent, dans l'état durci, des auto-adhésivités différentes selon le test de roulement de bille d'après la norme ASTM D3121-06, sachant qu'une quantité appliquée de 300 g/m² est utilisée sur un papier siliconé.

3. Utilisation selon l'une quelconque des revendications 1 ou 2, **caractérisée en ce que** le premier et le deuxième composant servant à ajuster les différentes viscosités contiennent des quantités différentes d'agents épaississants et/ou d'agents réticulants et/ou présentent des longueurs de chaîne polymère différentes.

4. Utilisation selon l'une quelconque des revendications 1 à 3, **caractérisée en ce que** le premier composant est transparent, et **en ce que** le deuxième composant contient un matériau colorant, qui est choisi parmi le groupe constitué de substances colorantes ou de charges présentant une couleur propre ; ou
**en ce que** le premier et le deuxième composant contiennent des matériaux colorants différents, qui sont choisis parmi le groupe constitué de substances colorantes ou de charges présentant une couleur propre.

5. Utilisation selon l'une quelconque des revendications 1 à 4, **caractérisée en ce que** le premier et le deuxième composant sont fournis en des quantités égales.

6. Utilisation selon l'une quelconque des revendications 1 à 4, **caractérisée en ce que** le premier et le deuxième composant sont fournis en des quantités différentes.

7. Utilisation selon l'une quelconque des revendications 1 à 6, **caractérisée en ce que** le premier et le deuxième composant sont disposés dans une cartouche commune dans des compartiments séparés, et **en ce que** les composants sont distribués à l'aide respectivement d'un piston hors de leurs compartiments, par des buses séparées, en particulier essentiellement sans mélange l'un à côté de l'autre selon une forme de serpentin.

8. Utilisation selon l'une quelconque des revendications 1 à 7, **caractérisée en ce que** le système est réalisé à la manière d'un pistolet de colle à cartouches.

9. Utilisation selon l'une quelconque des revendications 1 à 8, **caractérisée en ce que** le premier et le deuxième composant sont contenus dans deux sachets tubulaires séparés, sachant que les sachets tubulaires sont disposés dans une sorte de double pistolet à sachets tubulaires, pourvu de deux buses de distribution.

10. Utilisation selon l'une quelconque des revendications 1 à 9 servant à coller des films pare-vapeur avec ou sans non-tissé de revêtement sur des supports non lisses, absorbants, en particulier sur du plâtre, du béton, de la brique ou du Poroton.
